# EUROPÄISCHE PATENTANMELDUNG

(11) **EP 0 927 788 A2**
(43) Veröffentlichungstag der Anmeldung: **07.07.1999**
(21) Anmeldenummer: 98124189.6
(22) Anmeldetag: 21.12.1998
(51) Int. Cl.: D21B 1/02, D21B 1/34

(54) **Verfahren und Anlage zum Abscheiden bwz. -trennen von Schwer- und Leichtstoffen aus einer Suspension**

(30) Priorität: 20.02.1998 DE 19807116; 22.12.1997 DE 19757247
(71) Anmelder: Roediger Anlagenbau GmbH, D-63450 Hanau (DE)
(72) Erfinder: Huth, Robert, 63776 Mömbris (DE); Kuhnert, Dietmar, 63741 Aschaffenburg (DE); Jungk, Berthold, 63517 Rodenbach (DE)
(74) Vertreter: Stoffregen, Hans-Herbert, Dr. Dipl.-Phys.

(57) **Zusammenfassung**

Die Erfindung bezieht sich auf ein Verfahren sowie eine Anlage zum Abscheiden bzw. - trennen von Schwer- und Leichtstoffen aus einer Suspension, die durch Auflösen von Material wie insbesondere biologischem Abfall in einem Flüssigkeit wie Wasser enthaltenden Behälter entsteht. Um den Durchsatz durch den Behälter, in dem das Material aufgelöst wird, zu erhöhen, wobei gleichzeitig die wirksame Nutzung des Behälters durch das Austragen von Schwer- und Leichtstoffen nicht eingeschränkt werden soll, wird vorgeschlagen, dass die durch das Auflösen und Zerkleinern des Materials entstandene Suspension aus dem ersten Behälter in einen zweiten Behälter (10) abgelassen wird und dass in dem zweiten Behälter das Abscheiden und -trennen der Schwer- und Leichtstoffe aus der Suspension erfolgt.

## Beschreibung

Die Erfindung bezieht sich auf ein Verfahren zum Abscheiden bzw. -trennen von Schwer- und Leichtstoffen aus einer Suspension, die durch Auflösen von Material wie insbesondere biologischem Abfall in einem Flüssigkeit wie Wasser enthaltenden Behälter entsteht. Auch bezieht sich die Erfindung auf ein Verfahren zum Abscheiden von Schwerstoffen wie Sand von in einer Flüssigkeit wie Wasser aufzulösendem Material wie biologischem Abfall, wobei die Flüssigkeit mit dem Material in einen Behälter eingegeben und in diesem mittels eines Ruhrwerks vermischt wird. Ferner bezieht sich die Erfindung auf eine Anlage zum Abscheiden bzw. -trennen von Schwer- und Leichtstoffen aus einer Suspension, die durch Auflösen von Material wie insbesondere biologischem Abfall in einer Flüssigkeit wie Wasser herstellbar ist, umfassend einen ersten Behälter mit das Material in der Flüssigkeit wie Wasser auflösendem bzw. verkleinerndem Mischorgan wie Rotor sowie eine Stoffe aus der Suspension austragende Einrichtung. Schließlich bezieht sich die Erfindung auf eine Anlage zum Abscheiden von Schwerstoffen wie Sand von in einer Flüssigkeit wie Wasser aufzulösendem Material wie biologischem Abfall, wobei die Flüssigkeit und das Material in einen ersten Behälter eingegeben und in diesem mittels eines Rührwerks vermischbar ist und wobei zum einen das Rührwerk zumindest ein von einer Welle abragendes Mischelement wie Mischstab oder -propeller aufweist und zum anderen ein das Material zerschlagendes Schneidelement in dem Behälter vorgesehen ist.

Um biologischen Abfall zu entsorgen ist es bekannt, diesen mit einer Flüssigkeit in einen als Suspenser zu bezeichnenden Behälter einzugehen, der vorzugsweise die Form eines Zylinders aufweist und dessen Achse vertikal verläuft. In dem Behälter ist ein Rotor angeordnet, dessen Drehachse mit der Längsachse des Behälters zusammenfallen kann. Beim Betrieb werden in dem Behälter die zu behandelnden, d. h. aufzulösende organische Stoffe wie Faserstoffe zusammen mit der Flüssigkeit eingetragen. Durch die Drehung des Rotors werden die Faserstoffe auseinandergerissen und zerkleinert und dabei mit der Flüssigkeit vermischt, so dass eine Suspension entsteht.

Um eine Weiterverwendung der Suspension zu ermöglichen, müssen zunächst die Leicht- und Schwerstoffe entfernt werden, damit die Suspension zum Beispiel eingedickt und einem Faulturm zugeführt werden kann. Hierzu ist es bekannt, innerhalb des Behälters einen verschwenkbaren Rechen anzuordnen, um vom Bodenbereich des Behälters die Schmutzstoffe austragen zu können. Da sich die Schwerstoffe im Bodenbereich, und zwar insbesondere im Bereich von trommelförmig ausgebildeten Siebblechen ansammeln, die durch die abgelagerten Schwerstoffe schnell verstopfen, muss der Betrieb des Suspensers häufig unterbrochen werden, um mittels des Rechens die Schmutzstoffe zu entfernen. Eine entsprechende Anlage zum Auflösen von Faserstoffen aus insbesondere Biomüll ist der EP 0 598 187 B1 (DE 42 35 119 C1) zu entnehmen.

Aus der Praxis ist es bekannt, dass die Zeitspanne, innerhalb der der Suspenser mittels eines Rechens gesäubert wird, ca. 30 Minuten beträgt, wohingegen die Zeit des An- bzw. Vermischens des Abfalls mit der Flüssigkeit zwischen 45 und 60 Minuten dauert. Dies wiederum bedeutet, dass die Dauer, während der die Schmutzstoffe entfernt werden, im Vergleich zu der Anmischzeit relativ groß ist, so dass infolgedessen die Anlage über einen relativ langen Zeitraum still steht.

Ein Pulper mit hoher Auflöseeffizienz wird in der EP 0 321 665 B1 beschrieben. Dabei werden in ein zylinderförmiges senkrecht stehendes Gefaß aufzulösendes Material einem im Bodenbereich angeordneten Rotor zugeführt, wodurch eine gleichmäßige Behandlung des Materials erzielt werden soll.

Der vorliegenden Erfindung liegt u. a. das Problem zugrunde, ein Verfahren und eine Anlage der eingangs genannten Art derart weiterzubilden, dass der Durchsatz durch den Behälter, in dem das Material aufgelöst wird, erhöht wird, wobei gleichzeitig die wirksame Nutzung des Behälters durch das Austragen von Schwer- und Leichtstoffen nicht eingeschränkt werden soll. Auch soll durch die Erfindung das Problem gelöst werden, mit einfachen Maßnahmen eine Vorabscheidung von Schwerstoffen wie Sand zu ermöglichen, um insbesondere die Menge der bei der Behandlung der Suspension anfallenden Schwerstoffe zu reduzieren.

Verfahrensmäßig wird das Problem im Wesentlichen zum einen dadurch gelöst, dass die durch das Auflösen und Zerkleinern des Materials entstandene Suspension - ohne weitere Behandlung - aus dem ersten Behälter in einen zweiten Behälter abgelassen wird, dass in dem zweiten Behälter die Suspension behandelt wird und dass in dem zweiten Behälter das Abscheiden und -trennen der Schwer- und Leichtstoffe aus der Suspension erfolgt.

Abweichend vom vorbekannten Stand der Technik erfolgt das Herstellen und Behandeln der Suspension nicht in einem einzigen Behälter, sondern es erfolgt eine Trennung dadurch, dass das zeitaufwendige und ein Unterbrechen der Suspensionbehandlung bewirkende Austragen der Schwer- und Leichtstoffe in einem weiteren Behälter erfolgt.

Das Anmischen des in dem ersten Behälter eingebrachten und mit Flüssigkeit wie Wasser vermischten und zerschlagenen Biomaterials sowie das Abscheiden bzw. -trennen der Schwer- und Leichtstoffe aus der Suspension erfolgt in verschiedenen Behältern. Hierdurch kann der gesamte Durchsatz erhöht werden, da die Zeit, die für das Anmischen der Materialien und der Flüssigkeit zur Herstellung der Suspension länger dauert als diejenige, in der die so hergestellte Suspension behandelt wird, d. h. die Schwer- und Leichtstoffe im erforderlichen Umfang abgeschieden bzw. abgetrennt und ausgetragen werden.

In Weiterbildung der Erfindung ist vorgesehen, dass in dem zweiten Behälter nach dem Abtrennen bzw. -scheiden von Schwer- und Leichtstoffen ein Teil behandelter Suspension bei gleichzeitigem Entfernen von Schwimm- und Leichtstoffen aus der Suspension aus dem zweiten Behälter abgelassen wird und dass anschließend der zweite Behälter mit Flüssigkeit wie Wasser, insbesondere Prozesswasser in einer Menge aufgefüllt wird, die vorzugsweise der oder in etwa der abgelassenen Menge behandelter Suspension entspricht.

Um ein Abscheiden von Leicht- und/oder Schwimmstoffen zu beschleunigen, wird die Suspension belüftet. Hierdurch erfolgt gleichzeitig eine Durchmischung. Dabei erfolgt jedoch ein Lufteintrag derart, dass abgeschiedene Schwerstoffe nicht aufgewirbelt werden.

In Weiterbildung der Erfindung wird vorgeschlagen, dass nach einem ersten Ablassen von Suspension und Wiederauffüllen des zweiten Behälters mit Flüssigkeit wie Wasser sowie anschließendem Durchlüften erneut Suspension bis zu einer in dem zweiten Behälter verbleibenden Menge x abgelassen wird und dass anschließend der zweite Behälter mit einer Flüssigkeit wie Prozesswasser einer Menge y mit vorzugsweise 2x < y < 4x aufgefüllt wird. Sodann wird die so hergestellte mit Schwer- und Leichtstoffen angereicherte Suspension belüftet, die so erhaltene Suspension wird abgelassen und vorzugsweise dem ersten Behälter wieder zugeführt, und schließlich werden die im Boden abgelagerten Schwerstoffe aus dem zweiten Behälter ausgetragen.

Die Schwimm- und Leichtstoffe werden vorzugsweise durch eine umlaufende Rechenanlage entfernt, d. h., dass im Bereich des Auslasses des zweiten Behälters ein Rechen angeordnet ist, der von hakenförmigen Elementen durchsetzt wird, die von einem umlaufenden Band ausgehen. Die hakenförmigen Vorsprünge erfassen die von dem Rechen zurückgehaltenen Leicht- und Schwimmstoffe und entfernen diese sodann aus dem zweiten Behälter. Die abragenden hakenförmigen Vorsprünge selbst erfassen ebenfalls Leicht- und Schwimmstoffe, also unabhängig vom Rechen.

Die Feststoffe selbst werden vorzugsweise in einer kanalartigen Senke angesammelt und mittels eines ersten Förderaggregats wie Bodenschnecke einem zweiten Förderaggregat wie Schneckenförderer zugeführt, von dem die Feststoffe an einen weiteren Behälter abgegeben werden. Dabei können die Schwerstoffe während des Transports in dem zweiten Förderaggregat gewaschen werden.

Insbesondere zeichnet sich die Erfindung durch ein Verfahren zum Abscheiden bzw. Abtrennen von Schwer- und Leichtstoffen aus einer durch Auflösen von vorzugsweise biologischem Abfall in Flüssigkeit wie Wasser in einem ersten Behälter entstandenen Suspension durch die Verfahrensschritte aus:
- Ablassen der Suspension in unbehandeltem Zustand aus dem ersten Behälter in einen zweiten Behälter,
- Belüften der Suspension in dem zweiten Behälter zur Flotation der Leicht- und Schwimmstoffe bei gleichzeitigem Absetzen der Schwerstoffe im Bodenbereich des zweiten Behälters,
- teilweises Ablassen von Suspension aus dem zweiten Behälter bei gleichzeitigem Entfernen der Schwimm- und Leichtstoffe,
- Wiederauffüllen des zweiten Behälters mit Wasser,
- Belüften der Suspension,
- erneutes Ablassen der Suspension bis zu einer verbleibenden Menge x,
- Auffüllen des zweiten Behälters mit Wasser mit einer Menge y mit 2x < y < 4x,
- Durchmischen der Suspension durch Belüften bei Vermeidung eines Aufwirbelns der Schwebstoffe,
- vollständiges oder nahezu vollständiges Ablassen der Suspension und
- Austragen der Schwerstoffe.

Ein Verfahren zum Abscheiden von Schwerstoffen wie Sand von in einer Flüssigkeit wie Wasser aufzulösendem Material wie biologischem Abfall, wobei die Flüssigkeit mit dem Material in einen Behälter eingegeben und in diesen mittels eines Rührwerks vermischt wird, zeichnet sich dadurch aus, dass zu Beginn des Vermischens das Material in die Flüssigkeit vom Bodenbereich des Behälters ausgehend zum Rührwerk hin gefördert und eingemischt wird bei gleichzeitiger Vermeidung oder weitgehender Vermeidung einer Suspensionsbildung, dass während des Einmischens im Bodenbereich angesammelte Schwerstoffe nach dem Einmischen abgelassen werden und dass anschließend durch Richtungsumkehr des Rührwerks ein Durchmischen und/oder Zerfasern des Materials in der Flüssigkeit zur Bildung einer Suspension erfolgt. Dabei wird das Rührwerk während des Einmischens mit einer Drehzahl von in etwa 10 bis 50 %, vorzugsweise 20 bis 40 % derjenigen Drehzahl gedreht, bei der nach Drehrichtungsumkehr das Rührwerk zum Durchmischen bzw. Zerfasern des Materials in der Flüssigkeit gedreht wird.

Als Weiterbildung sieht die Erfindung vor, dass das Rührwerk mit einem abragenden Rührelement mit einer Umfangsgeschwindigkeit von in etwa 10 bis 20 m/sec gedreht wird.

Um im erforderlichen Umfang ein Zerfasern des Materials zu ermöglichen, wird synchron mit dem Rührelement ein Schneidelement gedreht, dessen Umfangsgeschwindigkeit gleich oder in etwa gleich der des abragenden Rührelementes ist.

Um beim Durchmischen bzw. Zerfasern des Materials abgeschiedene Schwerstoffe wie Sand nicht wieder aufzuwirbeln, ist vorgesehen, dass vor dem Durchmischen des Materials mit der Flüssigkeit im Boden des Behälters abgeschiedene Schwerstoffe einer Schleuse und sodann einem zweiten Behälter oder unmittelbar dem zweiten Behälter zugeführt werden.

Dabei werden dem zweiten Behälter pro Teil abgelassenem Schwerstoff in etwa 2 bis 4 Teile Flüssigkeit zugegeben, die Schwerstoffe gewaschen und diese sodann ausgetragen, wobei Flüssigkeit aus dem zweiten Behälter abgelassen wird.

Eine Anlage zum Herstellen einer Suspension aus Abfall wie biologischem Abfall und Flüssigkeit wie Wasser und Abscheiden bzw. -trennen von Leicht- und Schwerstoffen aus der Suspension umfassend einen ersten Behälter mit das Material in der Flüssigkeit auflösenden bzw. zerkleinernden Mischorgan wie Rotor sowie einer Stoffe aus der Suspension austragenden Einrichtung zeichnet sich dadurch aus, dass die Anlage einen mit dem ersten Behälter verbindbaren unbehandelte Suspension aufnehmenden zweiten Behälter aufweist, der einen Belüfter, die zumindest beim Ablassen von Suspensionen aus dem zweiten Behälter Leicht- und Schwerstoffe austragende Einrichtung sowie ein im Bodenbereich verlaufendes Schwerstoffe austragendes erstes Förderaggregat, umfasst.

Dabei kann die Einrichtung ein umlaufendes Rechenaggregat sein. Das erste die Schwerstoffe austragende Förderaggregat selbst kann als Förderschnecke ausgebildet sein, die die Schwerstoffe zu einem vom Bodenbereich des zweiten Behälters ausgehenden zweiten Förderaggregat wie Förderschnecke fördert, um die Schwerstoffe an einen weiteren Behälter zu übergeben. Dabei kann im Förderweg des zweiten Förderaggregats eine Wascheinrichtung für die Schwerstoffe angeordnet sein.

Um ein einfaches Ansammeln und Austragen der Schwerstoffe zu ermöglichen, weist der Boden des zweiten Behälters eine kanalartige Senke auf, innerhalb der das erste Förderaggregat verläuft.

In Weiterbildung der Erfindung ist vorgesehen, dass die über das Rechenaggregat ausgetragenen Schwebe- und Leichtstoffe über eine Austragsschnecke mit integrierter Wascheinrichtung einem dritten Behälter zuführbar sind.

Eine Anlage zum Abscheiden von Schwerstoffen wie Sand von in einer Flüssigkeit wie Wasser aufzulösendem Material wie biologischem Abfall, wobei die Flüssigkeit und das Material in einem ersten Behälter eingegeben und in diesem mittels eines Rührwerks vermischbar sind, wobei zum einen das Rührwerk ein von einer Welle abragendes Mischelement wie Mischstab oder -propeller aufweist und zum anderen ein das Material zerschlagendes Schneidelement in dem Behälter vorgesehen ist, zeichnet sich dadurch aus, dass das Schneidelement unterhalb des Mischelementes von der Welle ausgeht, wobei insbesondere das Schneidelement und das Mischelement gleich oder nahezu gleiche Durchmesser aufweisen. Dabei sollte der Durchmesser des Mischelementes bzw. des vorzugsweise scheibenförmigen Schneidelementes in etwa 1/3 bis 1/5, vorzugsweise 1/4 vom Durchmesser des eine Zylinderform aufweisenden Behälters oder Suspensers betragen.

In hervorzuhebender Weiterbildung der Erfindung ist vorgesehen, dass im Behälter umfangsinnenwandseitig in axialer Richtung des Behälters verlaufende Vorsprünge derart vorgesehen sind, dass eine verbesserte Mischwirkung erzielt wird. Die Vorsprünge selbst, die vorzugsweise rippenartig ausgebildet sind, sollten im Schnitt eine dreieckförmige, insbesondere stumpfwinklig dreieckförmige Geometrie aufweisen, wobei die Vorsprünge, insbesondere drei Vorsprünge gleichmäßig über den Innenumfang des Behälters verteilt angeordnet sein können. Jeder Vorsprung kann dabei radial in den Behälter mit einer Höhe vorspringen, die in etwa 1/30 bis 1/10 vorzugsweise in etwa 1/20 des Durchmessers des Behälters entspricht. Auch ist hervorzuheben, dass koaxial zur Achse des Schneidelements ein insbesondere dieses und/oder das Mischelement umgebender sich zum Behälterboden hin verjüngender Konus angeordnet ist, um die Zerkleinerungswirkung, also das Zerschlagen des Materials zu verbessern. Auch besteht die Möglichkeit, die bodenseitige Konusöffnung oberhalb des Schneidelements anzuordnen.

Losgelöst von der erfindungsgemäßen Lehre kann - wie der Stand der Technik es vorsieht - die von den Leicht- und Schwerstoffen befreite Suspension zum Beispiel einem Faulturm zugeführt werden. Dort kann ein anaerobisches Gären zur Gewinnung von Biogas erfolgen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von einem der Zeichnung zu entnehmenden bevorzugten Ausführungsbeispiel.

Es zeigen:
- Fig. 1: eine Draufsicht auf einen Schwer- und Leichtstoffe aus einer Suspension abscheidenden bzw. -trennenden Behälter,
- Fig. 2: einen Schnitt entlang der Linie A-A in Fig. 1,
- Fig. 3: einen Schnitt entlang der Linie B-B in Fig. 1,
- Fig. 4: einen Querschnitt eines Behälters zur Aufnahme von zu vermischender Flüssigkeit mit Material und
- Fig. 5: eine Draufsicht auf den Behälter nach Fig. 4.

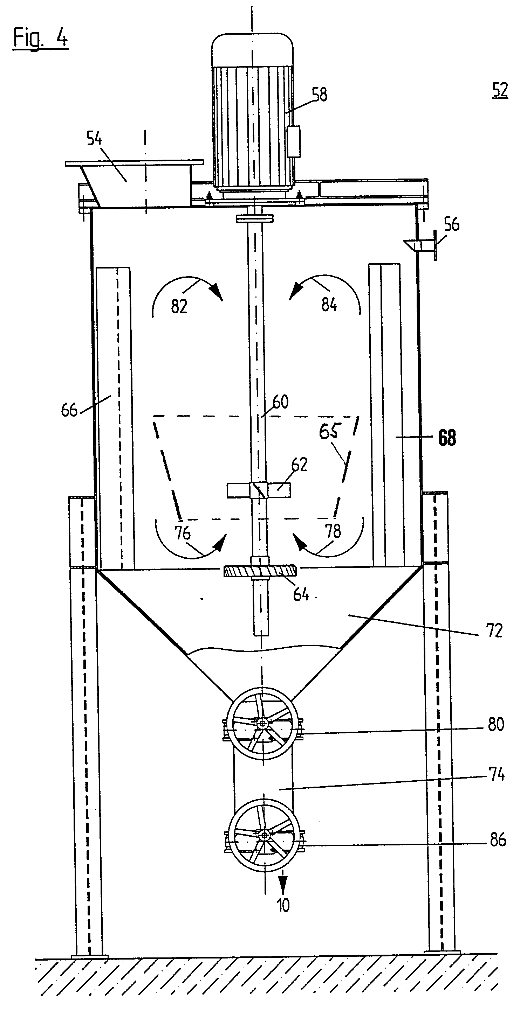

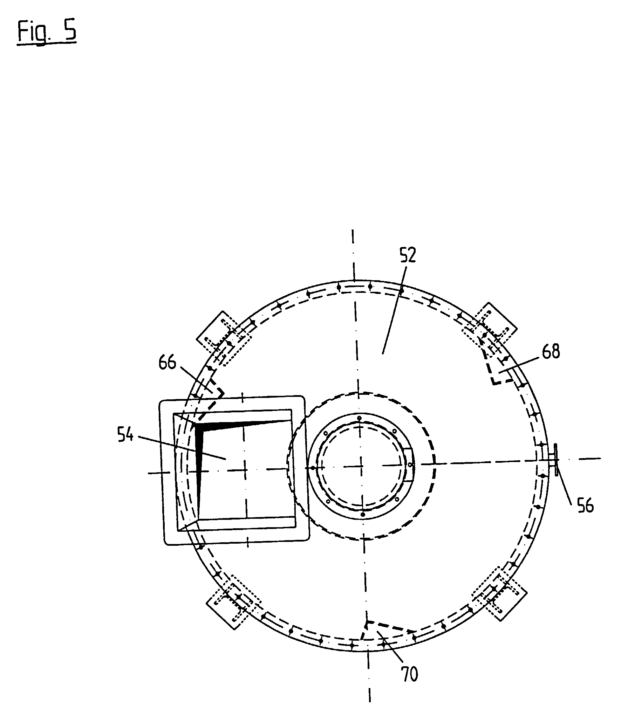

Um aus biologischem Abfall eine zum Beispiel in einem Faulbehälter zu vergärende Suspension zu gewinnen, ist es bekannt, den biologischen Abfall mit Wasser in einen sogenannten Suspenser anzumischen, d.h. organische Stoffe wie Faserstoffe aufzulösen und das Material zu zerkleinern. Ein bevorzugt zum Einsatz gelangender Suspenser ist in den Fig. 4 und 5 dargestellt.

Erfindungsgemäß ist ein solcher - oder einem dem Stand der Technik zu entnehmender - Suspenser, der als zylinderischer Behälter mit entlang dessen Mittelachse verlaufendem Rotor zum Auflösen bzw. Zerkleinern der Stoffe ausgebildet sein kann, mit einem in den Figuren dargestellten sogenannten zweiten Behälter 10 verbunden, in dem die angemischte Suspension einbringbar ist. Dabei wird zunächst der Behälter 10 bis zu einem Niveau 12 gefüllt. Vorzugsweise mittig in den Behälter 10 mündet eine Zuleitung 14, über die die Suspension eingebracht wird. Ferner befindet sich im Bodenbereich des Behälters 10 ein Durchbrechungen aufweisendes rohrförmiges Belüftungsorgan 15, um Gas einzutragen, durch das die Suspension durchmischt wird.

Im Bereich einer Stirnwandung 16 verläuft ein sich innerhalb des Behälters 10 erstreckendes umlaufendes Förderorgan 18 mit abragenden hakenförmigen Mitnehmern 20, die einen Rechen durchsetzen, um von diesen zurückgehaltene Schweb- bzw. Leichtstoffe zu erfassen und mitzunehmen. Der Rechen ist dabei einem Auslass 22 des Behälters 10 vorgeschaltet, über den von Schwer- und Leichtstoffen befreite Suspension zum Beispiel einem Faulbehälter zugeführt werden kann.

Im Bereich der Stirnwand 16 des Behälters 10 unterhalb eines Abwurfs 24 des die abragenden Mitnehmer 20 aufweisenden Förderorgans 18 ist im Ausführungsbeispiel ein Container oder ein sonstiger Behälter 26 angeordnet, in den die von dem Förderorgan 18 mitgenommenen Leicht- und Schwerstoffe abgeworfen werden.

Alternativ können zuvor die von dem Förderorgan 18 mitgenommenen Stoffe in einen Trichter abgeworfen werden, von dem seinerseits ein rein prinzipiell dargestelltes Förderorgan wie Austragsschnecke 28 ausgehen kann, um die Stoffe zu verdichten und einem nicht dargestellten Container zuzuführen. Die Austragsschnecke 28 kann eine Wascheinrichtung für die Stoffe aufweisen.

Im Boden 30 des Behälters 10, und zwar im Bereich einer Längswand 32 verläuft eine kanalartige Senke 34, in der als Förderaggregat eine Bodenschnecke 36 angeordnet ist, um im Bereich des Bodens 30 abgelagerte Feststoffe zu einer im Bereich der weiteren Stirnwand 38 verlaufenden Senke 40 zu fördern, von der eine Förderschnecke 42 ausgeht, über die die Feststoffe einem weiteren Container 44 zuführbar sind. Im Bereich der Förderstrecke der Schnecke 42, die von einem Gehäuse umgeben ist, kann eine Wascheinrichtung zum Waschen der Feststoffe vorgesehen sein.

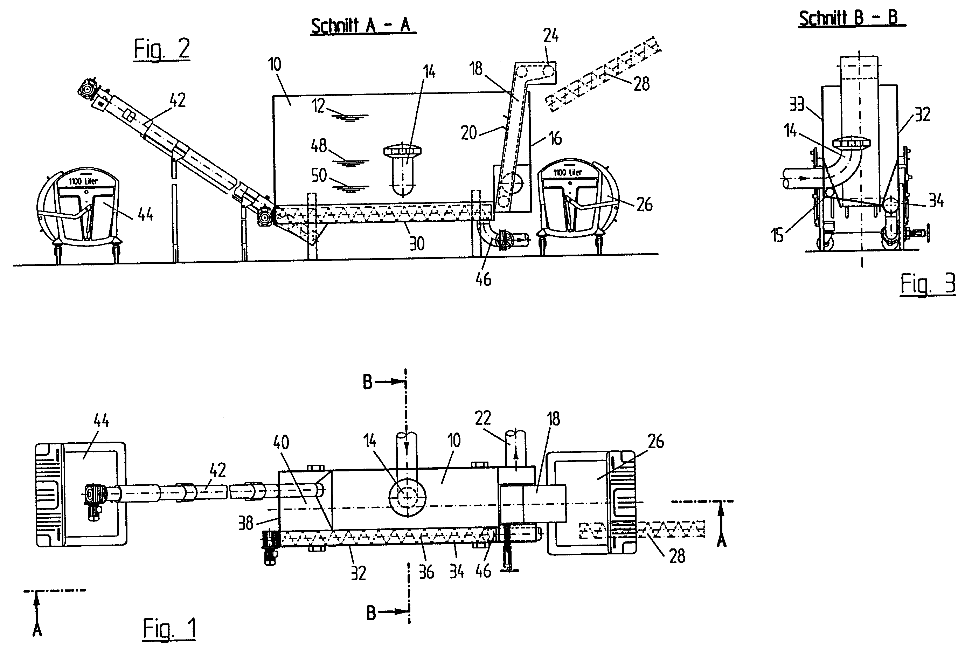

Wie die Schnittdarstellung gemäß Fig. 3 verdeutlicht, steigt der Boden 30 von der Senke 34 ausgehend bis zur gegenüberliegenden Wandung 33 an. In diesem Bereich und sich entlang der Wandung 33 erstreckend verläuft das Belüftungsrohr 15.

Im Bereich des Förderbeginns der Bodenschnecke 36 ist des Weiteren ein über ein Lochblech abgedeckter verschließbarer Auslass 46 vorhanden, um in nachstehend beschriebener Weise mit Leicht- und Schwebstoffen bzw. Schwerstoffen angereicherte Suspension abzulassen und einem Faulbehälter zuzuführen.

Um die bis zum Füllstand 12 in dem Behälter 10 eingelassene unbehandelte, also allein angemischte Suspension von Schwer- und Leicht- bzw. Schwebstoffen zu befreien, ist folgende Verfahrensweise vorgesehen.

So wird zunächst über den Belüfter 15 Luft eingetragen, um durch Flotation Schwimm- und Leichtstoffe an der Flüssigkeitsoberfläche abzuscheiden. Abgelagerte Schwerstoffe und/oder Sandanteile werden im Bodenbereich abgelagert. Dabei erfolgt der Lufteintrag derart, dass die abgelagerten Schwerstoffe bzw. Sandanteile nicht wieder aufgewirbelt werden. Sodann wird die Suspension über die Leitung 22 abgelassen, bis der Füllstand 48 erreicht wird. Während des Ablassens der Suspension werden die an dem Auslass 22 vorgeordneten Rechen zurückgehaltenen Schwimm- und Leichtstoffe von dem von dem Endlosband 18 ausgehenden Mitnehmer 20 erfasst und über den Abwurf 24 dem Container 26 oder über die Austragsschnecke 28 mit integrierter Wascheinrichtung einem Container zugeführt. Nach Erreichen des Füllstands 48 wird der Behälter 10 vorzugsweise bis maximal zum ursprünglichen Füllstand 12 erneut mit Flüssigkeit insbesondere Wasser gefüllt. Anschließend erfolgt ein Durchmischen der Suspension durch Einleiten von Luft über den Belüfter 15. Sodann erfolgt ein erneutes Ablassen von Suspension bei gleichzeitigem Entfernen der Schwimm- und Leichtstoffe mittels der umlaufenden Rechenanlage. Dabei wird das Niveau der Suspension im Behälter 10 bis zum Füllstand 50 abgesenkt. Die so vorhandene Restsuspension wird mit einer vorzugsweise dreifachen Menge an Flüssigkeit wie Prozesswasser aufgefüllt, um anschließend durch die aus dem Belüfter 15 austretende Luft intensiv durchmischt zu werden. Schließlich wird die so gewonnene Mischsuspension über den Auslass 46 abgelassen, um vorzugsweise dem Suspenser wieder zugeführt zu werden. Nachdem die Suspension aus dem Behälter 10 entfernt ist, werden über die Förderschnecke 36 die in der Senke 34 abgelagerten Schwerstoffe bzw. Sandanteile zur Senke 40 gefördert, um sodann über die Schnecke 42 nach gegebenenfalls erfolgtem Waschen in den Container 44 abgeworfen zu werden.

Die Gesamtdauer der Behandlung der Suspension in dem Behälter 10 beläuft sich vorzugsweise in etwa auf ca. 30 Minuten.

Dieser Zeitraum ist geringer als derjenige, der benötigt wird, um den biologischen Abfall mit der Flüssigkeit wie Wasser anzumischen, so dass infolgedessen ein kontinuierlicher Betrieb des Suspensers gewährleistet ist, der nach dem Stand der Technik durch das Austragen der Schwer- und Leichtstoffe unterbrochen werden muss.

Selbstverständlich hängt die tatsächliche Zeitdauer von den individuellen Gegebenheiten ab. Die zuvor wiedergegebenen Daten sollen jedoch im Wesentlichen die zeitlichen Verhältnisse der einzelnen Behandlungsstufen zueinander verdeutlichen.

In den Fig. 4 und 5 ist ein Querschnitt bzw. eine Draufsicht auf einen sogenannten Suspenser 52 dargestellt, in den über einen Trichter 54 aufzulösendes Material wie insbesondere biologischer Abfall und über einen Zulauf 56 Flüssigkeit wie Wasser eingefüllt werden. Dabei werden zunächst das Wasser und sodann der Müll in den Behälter 52 eingegeben. Das Verhältnis von Müll zu Wasser beträgt dabei vorzugsweise 1 : 2 bis 3.

Entlang der Längsachse des Behälters 52 erstreckt sich eine von einem Elektromotor 58 angetriebene Welle 60, die ein Mischorgan wie Propeller 62 sowie unterhalb von diesem eine Schneidscheibe 64 aufweist, wobei der Durchmesser des Schneidmessers 64 in etwa dem des Propellers 62 entspricht. Der Durchmesser von dem Schneidelement 64 und dem Propeller 62 beträgt des Weiteren in etwa 25 % des Durchmessers des Behälters 52. Koaxial zur Welle 60 verläuft ein Konus 65 (gestrichelt dargestellt), der sich zum Behälterboden hinverjüngt und im Ausführungsbeispiel mit seiner bodenseitigen Öffnung oberhalb des Schneidelements 64 verläuft. Selbstverständlich besteht auch die Möglichkeit, dass der Konus 65 das Schneidelement 64 umgibt.

Der Konus 65 verstärkt die gerichtete Zufuhr des zu zerschlagenden Materials zum Schneidelement 64 hin, so dass die Zerkleinerungswirkung verbessert wird.

Gleichmäßig verteilt vom Innenumfang des Behälters 52 ragen sogenannte Stromunterbrecher 66, 68, 70 ab, die im Schnitt eine dreieckförmige Geometrie, und zwar vorzugsweise eine stumpfwinklige dreieckförmige Geometrie aufweisen. Die Stromunterbrecher 66, 68, 70 haben die Aufgabe, die mittels des Rührwerks 62 in Drehung versetzte Flüssigkeit bzw. das Flüssigkeitsmaterialgemisch zu verwirbeln, wobei gleichzeitig in Bezug auf die Rotationsrichtung des Gemisches im Schatten der Vorsprünge 66, 68, 70 Beruhigungszonen ausgebildet werden, damit in diesen Schwerstoffe wie Sand abgeschieden und zum trichterförmig ausgebildeten Bodenbereich 72 gelangen können. An den Bodenbereich 72 schließt sich eine Schleuse 74 an, dessen Fassungsvermögen in etwa 1 bis 5 %, vorzugsweise in etwa 3 % des Volumens des Behälters 52 an sich entspricht. Die Schleuse 74 ist sodann mit dem zuvor beschriebenen Behälter 10 verbunden, um in diesen eine Suspension vorzugsweise in unbehandeltem Zustand abzulassen.

Die Drehrichtung der Welle 60 ist drehrichtungsumkehrbar, wobei die Drehzahl selbst vorzugsweise mittels eines Frequenzumformers veränderbar ist. Dabei wird die Welle 60 nach dem Einfüllen von Wasser und dem Müll derart gedreht, dass mittels des Propellers 62 Wasser und Müll in Richtung der Pfeile 76, 78 angesaugt werden, also vom Bodenbereich 72 des Behälters 52 in Richtung der Welle 60. Hierdurch erfolgt im eigentlichen Sinne allein das Einmischen des Materials in das Wasser, ohne dass das Material selbst zerschlagen wird. Während dieses Einmischens bildet sich keine Suspension, so dass infolgedessen Schwerstoffe wie Sand ausgeschieden und in den trichterförmigen Bodenbereich 72 gelangen können. Nach Abschluss der Einmischphase, die bei einem Behälter mit einem Fassungsvermögen von 5 m³ in etwa 15 bis 20 Minuten betragen kann, wird der obere Verschluss 80 der Schleuse 74 geschlossen, nachdem sich die Schwerstoffe in der Schleuse 74 abgesetzt haben. Anschließend erfolgt eine Drehrichtungsumkehr des Rührwerks, um das Flüssigkeitsmaterialgemisch in Pfeilrichtung 82, 84 zu dem Propeller 62 und dem unterhalb von diesem angeordneten Schneidwerk 64 zu fördern, wodurch das Zerfasern des Materials und die Bildung der Suspension erfolgt.

Parallel hierzu kann der untere Verschluss 86 der Schleuse 74 geöffnet werden, um die in der Schleuse 74 vorhandenen Schwerstoffe in den Behälter 10 abzulassen, wobei die Menge des Schwerstoffe mit in etwa der dreifachen Menge an Flüssigkeit vermischt und somit gewaschen wird, um anschließend in zuvor beschriebener Weise mittels der Förderorgane 36, 42 die Schwerstoffe wie Sand auszutragen.

Das Zerschlagen bzw. Zerfasern des Materials im Suspenser 52 dauert in etwa 30 bis 40 Minuten, also in etwa doppelt so lange wie die Einmischphase.

## Patentansprüche

1. Verfahren zum Abscheiden bzw. -trennen von Schwer- und Leichtstoffen aus einer Suspension, die durch Auflösen von Material wie insbesondere biologischem Abfall in einem Flüssigkeit wie Wasser enthaltenden Behälter entsteht,
**dadurch gekennzeichnet**,
dass die durch das Auflösen und Zerkleinern des Materials entstandene Suspension aus dem ersten Behälter in einen zweiten Behälter abgelassen wird und dass in dem zweiten Behälter das Abscheiden und -trennen der Schwer- und Leichtstoffe aus der Suspension erfolgt.

2. Verfahren nach Anspruch 1,
**dadurch gekennzeichnet**,
dass aus dem ersten Behälter in den zweiten Behälter unbehandelte Suspension abgelassen wird.

3. Verfahren nach Anspruch 1 oder 2,
**dadurch gekennzeichnet**,
dass in dem zweiten Behälter nach dem Abtrennen bzw. -scheiden von Schwer- und Leichtstoffen ein Teil behandelter Suspension bei gleichzeitigem Entfernen von Leicht- bzw. Schwebstoffen aus dem zweiten Behälter abgelassen wird und dass anschließend der zweite Behälter mit Flüssigkeit wie Wasser in einer Menge aufgefüllt wird, die vorzugsweise der oder in etwa der abgelassenen Menge behandelter Suspension entspricht.

4. Verfahren nach zumindest einem der vorhergehenden Ansprüche,
**dadurch gekennzeichnet**,
dass zum Abscheiden von Leicht- und/oder Schwimmstoffen aus der Suspension diese bei Vermeidung eines Aufwirbelns von abgeschiedenen Schwerstoffen belüftet wird.

5. Verfahren nach zumindest einem der vorhergehenden Ansprüche,
**dadurch gekennzeichnet**,
dass nach einem ersten Ablassen von behandelter Suspension und Auffüllen mit Flüssigkeit wie Wasser sowie anschließendem Durchlüften erneut Suspension bis zu einer Menge x abgelassen wird, dass sodann der zweite Behälter mit Flüssigkeit wie Wasser einer Menge y mit vorzugsweise 2x < y < 4x aufgefüllt und sodann belüftet wird, dass die so erhaltene Suspension abgelassen und vorzugsweise dem ersten Behälter wieder zugeführt wird und dass anschließend die im Bodenbereich abgelagerten Schwerstoffe aus dem zweiten Behälter ausgetragen werden, wobei vorzugsweise die Schwerstoffe während des Austragens aus dem zweiten Behälter gewaschen werden.

6. Verfahren zum Abscheiden bzw. -trennen von Schwer- und Leichtstoffen aus einer durch Auflösen von Material wie biologischem Abfall in Flüssigkeit wie Wasser in einem ersten Behälter entstandenen Suspension
gekennzeichnet durch die Verfahrensschritte:
- Ablassen der Suspension aus dem ersten Behälter in unbehandeltem oder im Wesentlichen unbehandeltem Zustand in einen zweiten Behälter,
- Belüften der Suspension in dem zweiten Behälter zur Flotation von Leicht- und Schwimmstoffen bei gleichzeitigem Absetzen der Schwerstoffe im Bodenbereich des Bodenbehälters,
- teilweises Ablassen von Suspension aus dem zweiten Behälter bei gleichzeitigem Entfernen von Schwimm- und Leichtstoffen,
- Wiederauffüllen des zweiten Behälters mit Flüssigkeit wie Wasser,
- Belüften der Suspension,
- erneutes Ablassen von Suspension bis zu einer Menge x und anschliessendes Auffüllen mit Flüssigkeit einer Menge y, mit vorzugsweise 2x < y < 4x,
- Durchmischen der Suspension durch Belüften bei Vermeidung eines Aufwirbelns der Schwerstoffe,
- vollständiges oder nahezu vollständiges Ablassen der Suspension und
- Austragen der Schwerstoffe.

7. Verfahren nach zumindest einem der vorhergehenden Ansprüche,
**dadurch gekennzeichnet**,
dass die Schwimm- und Leichtstoffe durch eine umlaufende Rechenanlage entfernt werden und/oder dass die Feststoffe in einer vorzugsweise kanalartigen Senke des zweiten Behälters angesammelt und mittels eines ersten Förderaggregats wie Bodenschnecke einem zweiten Förderaggregat wie Schneckenförderer zugeführt werden, von dem die Feststoffe an einen weiteren Behälter abgegeben werden, wobei vorzugsweise die Schwerstoffe während des Transports in dem zweiten Förderaggregat gewaschen werden.

8. Verfahren zum Abscheiden von Schwerstoffen wie Sand von in einer Flüssigkeit wie Wasser aufzulösendem Material wie biologischem Abfall, wobei die Flüssigkeit mit dem Material in einen Behälter eingegeben und in diesem mittels eines Rührwerks vermischt werden,
**dadurch gekennzeichnet,**
dass zu Beginn des Vermischens das Material in die Flüssigkeit vom Bodenbereich des Behälters ausgehend zum Rührwerk hin gefördert und eingemischt wird bei gleichzeitiger Vermeidung oder weitgehender Vermeidung einer Suspensionsbildung,
dass während des Einmischens im Bodenbereich angesammelte Schwerstoffe nach dem Einmischen abgelassen werden und dass anschließend durch Richtungsumkehr des Rührwerks ein Durchmischen und/oder Zerfasern des Materials in der Flüssigkeit zur Bildung einer Suspension erfolgt.

9. Verfahren nach Anspruch 8,
**dadurch gekennzeichnet,**
dass das Rührwerk während des Einmischens mit einer Drehzahl von in etwa 10 bis 50 %, vorzugsweise 20 bis 40 % derjenigen Drehzahl gedreht wird, bei der nach Drehrichtungsumkehr des Rührwerks das Durchmischen bzw. Zerfasern des Materials erfolgt, wobei insbesondere das Rührwerk mit einem abragenden Rührelement peripher mit einer Umfangsgeschwindigkeit von in etwa 10 bis 20 m/sec gedreht wird.

10. Verfahren nach zumindest einem der vorgehenden Ansprüche,
**dadurch gekennzeichnet,**
dass vor dem Durchmischen des Materials mit der Flüssigkeit im Boden des Behälters abgeschiedene Schwerstoffe einer Schleuse und sodann einem weiteren Behälter oder unmittelbar dem weiteren Behälter zugeführt werden.

11. Verfahren nach zumindest Anspruch 10,
**dadurch gekennzeichnet,**
dass dem weiteren Behälter pro Teil abgelassenem Schwerstoff in etwa 2 bis 4 Teile Flüssigkeit zugegeben, die Schwerstoffe gewaschen und diese sodann ausgetragen werden, wobei die vorhandene Flüssigkeit aus dem Behälter abgelassen wird.

12. Anlage zum Herstellen einer Suspension aus Abfall wie biologischem Abfall und Flüssigkeit wie Wasser umfassend einen ersten Behälter (52) mit das Material mit der Flüssigkeit auflösendem bzw. zerkleinerndem Mischorgan wie Rotor sowie eine Stoffe aus der Suspension austragende Einrichtung,
**dadurch gekennzeichnet**,
dass die Anlage einen mit dem ersten Behälter (52) verbindbaren unbehandelte Suspension aufnehmenden zweiten Behälter (10) aufweist, der einen Belüfter (15), die zumindest beim Ablassen von Suspension aus dem zweiten Behälter Leicht- und Schwebstoffe austragende Einrichtung (18, 20) sowie ein im Bodenbereich (30) verlaufendes Schwerstoffe austragendes erstes Förderaggregat (36) umfasst.

13. Anlage nach Anspruch 12,
**dadurch gekennzeichnet**,
dass die Einrichtung ein umlaufendes Rechenaggregat (18) und/oder das erste Förderaggregat (36) eine Förderschnecke ist.

14. Anlage nach zumindest einem der vorhergehenden Ansprüche,
**dadurch gekennzeichnet**,
dass von dem ersten Förderaggregat (86) geförderte Schwerstoffe einem vom Bodenbereich (32) des zweiten Behälters (10) ausgehenden zweiten Förderaggregat (22) zuführbar sind, wobei vorzugsweise im Förderweg des zweiten Förderaggregats (42) wie Förderschnecke eine Wascheinrichtung für die Schwerstoffe vorgesehen ist.

15. Anlage nach zumindest einem der vorhergehenden Ansprüche,
**dadurch gekennzeichnet,**
dass die über die Einrichtung (18) ausgetragenen Schweb- und Leichtstoffe unmittelbar einem weiteren Behälter (26) oder über ein weiteres Förderorgan wie Austragsschnecke (28) mit vorzugsweise integrierter Wascheinrichtung einem weiteren Behälter wie Container zuführbar sind.

16. Anlage zum Abscheiden von Schwerstoffen wie Sand von in einer Flüssigkeit wie Wasser aufzulösendem Material wie biologischem Abfall, wobei die Flüssigkeit und das Material in einen Behälter wie Suspenser (52) eingebbar und in diesen mittels eines Rührwerks (60, 62) vermischbar sind und wobei zum einen das Rührwerk zumindest ein von einer Welle (60) abragendes Mischelement wie Mischstab oder - propeller (62) aufweist und zum anderen ein das Material zerschlagendes Schneidelement (64) im Behälter vorgesehen ist,
**dadurch gekennzeichnet,**
dass die Drehrichtung der Welle beim Einmischen des Materials in die Flüssigkeit von der bei Bildung einer Suspension aus der Flüssigkeit und dem Material abweicht
und dass das Schneidelement (64) unterhalb des Mischelementes (62) von der Welle (60) ausgeht.

17. Anlage nach Anspruch 16,
**dadurch gekennzeichnet,**
dass das Schneidelement (64) und das Mischelement (62) einen gleichen oder nahezu gleichen Durchmesser aufweisen, wobei insbesondere der Durchmesser des vorzugsweise scheibenförmigen Schneideelementes bzw. des Mischelementes in etwa 1/3 bis 1/5, vorzugsweise 1/4 vom Durchmesser des eine Zylinderform aufweisenden Behälters wie Suspensers (52) beträgt.

18. Anlage nach zumindest einem der vorgehenden Ansprüche,
**dadurch gekennzeichnet,**
dass in dem Behälter (52) umfangsinnenwandseitig in axialer Richtung des Behälters sich erstreckende vorzugsweise rippenartige Vorsprünge (66, 68, 70) derart vorgesehen sind, dass sich Beruhigungszonen zum Abscheiden von Schwerstoffen ausbilden, dass die Vorsprünge, insbesondere drei Vorsprünge vorzugsweise gleichmäßig über den Innenumfang des Behälters verteilt angeordnet sind, dass vorzugsweise jeder Vorsprung eine im Schnitt dreieckförmige, insbesondere stumpfwinkelig dreieckförmige Geometrie aufweist und/oder dass der Vorsprung (66, 68, 70) radial in den Behälter (52) mit einer Höhe vorspringt, die in etwa 1/30 bis 1/10, vorzugsweise in etwa 1/20 des Durchmessers des Behälters entspricht.

19. Anlage nach zumindest einem der vorgehenden Ansprüche,
**dadurch gekennzeichnet**,
dass in dem Behälter (52) koaxial zur Welle (60) des Schneidelements (64) ein Konus (65) angeordnet ist, der vorzugsweise das Schneidelement umgibt oder mit seiner bodenseitigen Öffnung oberhalb des Schneidelements verläuft.
